# EUROPEAN PATENT SPECIFICATION

(11) **EP 0 599 470 B1**
(45) Date of publication and mention of the grant of the patent: **16.09.1998**
(21) Application number: 93307990.7
(22) Date of filing: 07.10.1993
(51) Int. Cl.: H04N 7/18, G01N 21/89

(54) **Panoramic camera systems**
System für eine Panorama-Kamera
Systèmes de caméra panoramique

(30) Priority: 20.11.1992 US 979633
(43) Date of publication of application: 01.06.1994
(73) Proprietor: PICKER INTERNATIONAL, INC., Highland Heights Ohio 44143 (US)
(72) Inventor: Gilblom, David L., Los Altos, California 94024 (US)
(74) Representative: McGowan, Nigel George

(56) References cited:
- EP-A- 0 420 289
- US-A- 5 040 057

## Description

This invention relates to panoramic camera systems. It finds particular application in conjunction with video periscopes and will be described with particular reference thereto. However, it is to be appreciated that the invention will also find application in conjunction with other panoramic surveillance, and other wide angle video photography.

Periscopes, such as used in submarines, tanks, and the like, have traditionally been optical devices. Difficulties have arisen when several people needed to see the images viewed by the periscope at the same time or when the periscope images were to be permanently recorded. One technique for making permanent recordings was with a photographic camera. A camera, looking through the periscope, can only photograph the current field of view of the periscope. To view an entire 360° panorama, a series of photographs were taken which could later be connected into a panoramic image of the entire panorama.

Rather than using a photographic camera and the inherent delays for developing the film, similar results have been achieved with a conventional video camera. Using a conventional video camera, a series of frames of a video image were collected as the periscope was rotated. Each of these frames was analogous to a still photographic picture. At traditional video frame rates on the order of 30 frames per second, there was significant overlap among the images. Faster rotation or slower frame rates would cause blurring. Aligning and interconnecting the frame images was time-consuming and slow compared to a 30 frame per second acquisition rate. Differences from frame to frame causes discontinuities at the interfaces. Moreover, the apparent speed of rotation of the image when the camera is rotated parallel to its line sweep axis or direction varies across each image. That is, most periscopes rotate about a vertical axis to scan a horizontal horizon or parameter and most video cameras and video monitors have a horizontal sweep.

According to the present invention there is provided a panoramic camera system comprising: a lens means for focussing light from a field of view onto an array of light sensitive elements; a sweeping means for sweeping the field of view about an axis of rotation, said sweeping means including a motor means for rotating the lens and the light sensitive element array about the axis of rotation, the array of light sensitive elements being defined by a plurality of lines of light sensitive elements, which element lines are oriented generally parallel to the axis of rotation: a time delay and integration control means operatively connected to the sweeping means for controlling the light sensitive array such that lines of data are shifted along the array in coordination with the rotation of the lens means and the array about the axis of rotation.

One advantage of a camera according to the present invention is that it provides continuous, seam and discontinuity-free panoramic imaging.

Another advantage of a camera according to the present invention is that multiple display devices can access the data concurrently to provide a plurality of different types of displays.

Another advantage of a camera according to the present invention is that it is readily adaptable to a wide range of image processing technique and display formats.

Various embodiments of the present invention will now be described, by way of example, with reference to the accompanying drawings in which:
FIGURE 1 is a diagrammatic illustration of a panoramic imaging system in accordance with the present invention;
FIGURE 2 is a detailed illustration of a variation on the time delay and integration (TDI) camera assembly of FIGURE 1;
FIGURE 3 is a diagrammatic illustration of the field of view scanned by the system of FIGURE 1; and
FIGURE 4 is an alternative embodiment to that of FIGURE 1.

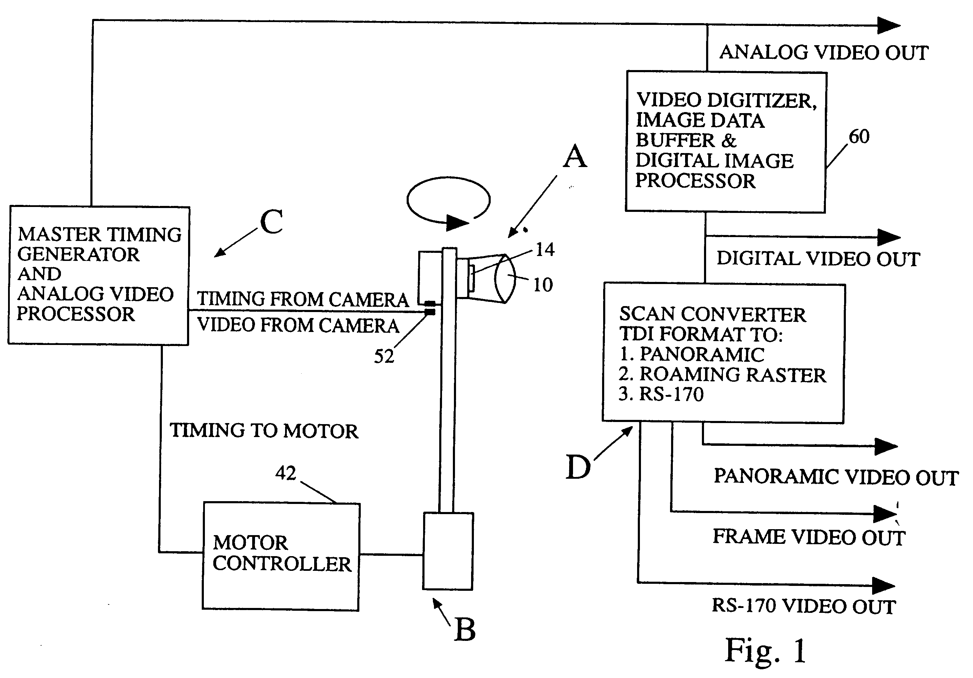

With reference to FIGURE 1, a TDI sensor means A converts light received from a field of view into a corresponding electronic signal. A sweeping or rotating means B rotates or sweeps the field of view along all or part of a 360° panoramic circle. A timing and control processor C coordinates the shifting of rows of data in the TDI sensor means with its rotation such that an output video signal represents a sweeping field of view without blurring. A digital processing and memory means D stores, processes, and displays all or a portion of the panoramic image.

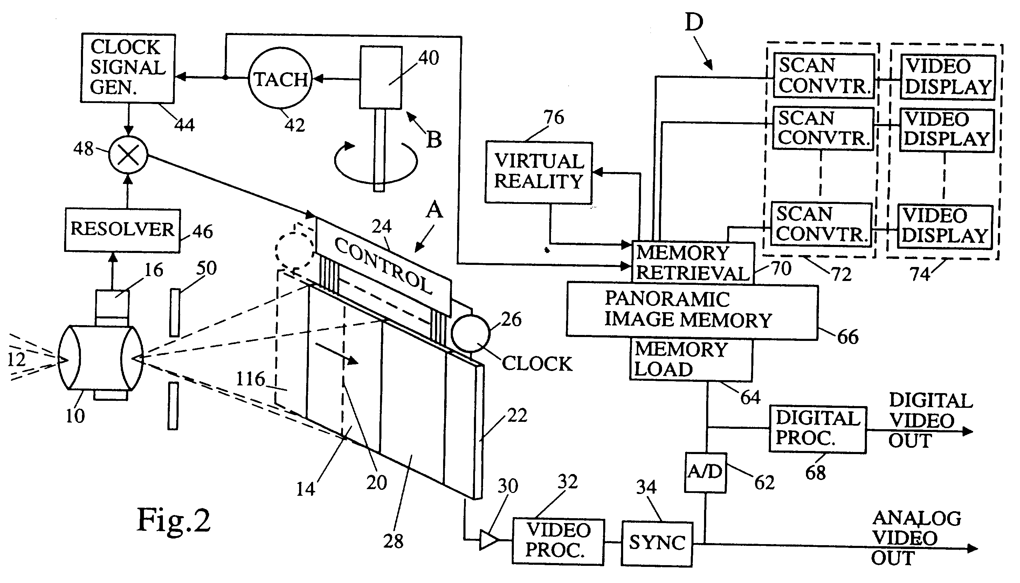

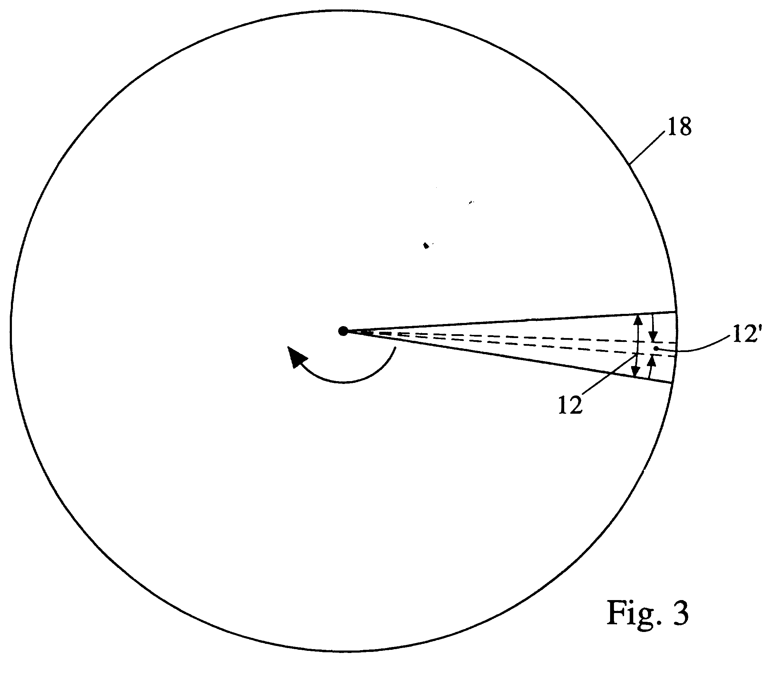

With continuing reference to FIGURE 1 and further reference to FIGURES 2 and 3, a lens assembly 10 focuses light from a field of view 12 onto an image sensor 14. The image sensor 14 includes a plurality of CCD or other light sensitive elements arranged in a rectangular array. In one embodiment, the light sensitive array includes a standard RS-170 CCD array which has 244 lines or rows of light sensitive elements and 600 elements per line. For higher resolution, larger CCD sensor arrays are preferred. More specifically, the rows or lines are oriented vertically, parallel to an axis of rotation of the field of view. Because the array is rectangular, the elements within each line can be visualized as horizontal columns parallel to a plane within which the field of view is swept. The lens assembly **10** is preferably adjustable, such as a zoom lens. By selectively adjusting the magnification of the zoom lens with an electric zoom lens control motor **16,** the field of view **12** is selectively widened or narrowed. For example, of a 360° circle **18** which surrounds the sensor assembly **A**, the lens might focus light or images from a 1° field of view on the sensor array **14**. By selectively adjusting the zoom, the lens can "zoom in" on a smaller area **12'**, e.g. a 0.1° field of view.

Preferably, the image sensor **14** is a color sensor. That is, the sensor has three CCD elements for each pixel. Prisms, filters, or the like render each element corresponding to the same pixel sensitive to only one of red, green, or blue light, for an RGB monitor. Other triadic color schemes may, of course, also he used. As yet another option, additional CCD elements may be provided corresponding to each pixel. The additional elements may have a phosphor, or the like which is responsive to other wavelengths of radiation, such as ultraviolet or infrared. In this manner, color, infrared, and UV images can he acquired concurrently.

As the sweeping means **B** sweeps or rotates the field of view along the panoramic circle **18**, a vertical line of the available light, e.g. a distant, stationary flagpole, has its image focused on one line of the sensor elements, e.g. line **20**. As the sweeping means rotates the TDI sensor means **A** with respect to the flagpole, the vertical line or flagpole moves along the sensor array **14**. In a CCD type array, the charge on each element is dissipated in proportion to the amount of light received. To read the data on the array, the charge values are shifted line by line toward a shift register **22**.

A control means **24** controls the shifting of the rows along the sensor array **14**. In particular, the control means **24** clocks the array **14** such that the line of charged values is shifted along the array **14** at the same speed that the vertical line of data or flagpole sweeps along the array **14**. The amount of charge dissipated by the image of the vertical line of light or flagpole continues over each of the lines of light sensitive elements. In the preferred 244 line embodiment, the image of the vertical line of light or the flagpole is integrated or summed 244 times. The shift register **22** serializes each line of charge values. In particular, a fast clock **26** clocks the shift register **22** 600 times, or as many horizontal columns of array elements as may be present in the selected light sensitive array, in between each time the charge values are shifted by one vertical line. In this manner, the output of the shift register is a multiplicity of vertical lines of video data which taken together, represent a continuous image. There is no inherent frame end.

It might he helpful to note that a traditional interlaced video camera has an integration means which allows the light sensitive array to receive light for a preselected duration, e.g. 1/60th second. When the integration is completed, a control means performs 244 shift operations on lines of video data to shift the entire field as rapidly as possible into a CCD storage array or section **28**. The storage section is shielded from light. As soon as all 244 lines of data are shifted into the storage section, the light sensitive array of CCD elements **14** starts the collection of light for a second frame. During the 1/60th second that light is collected for the second field, a shift register serializes the 600 charge values of each of the 244 lines of video data into a video output signal. Thus, a traditional video camera produces a series of 244 lines x 600 pixels as a frame; whereas, the TDI sensor produces a continuous image. Preferably, the control means 24 is also controllable to operate the TDI sensor A as a conventional video camera, particularly when there is no rotation. In this manner, detailed images of a region of interest can be made. When operating in the TDI mode, the storage section merely causes a 244 line delay before the lines reach the shift register.

Suitable TDI imaging means for use in the present invention are found in U.S. Patent Nos. 5,040,057, 4,949,172, and 4,922,337.

The output of the shift register 22 is conveyed to an amplifier 30 which amplifies the analog output of the shift register. A video processing channel 32 further processes the video signal with a bandpass filter for removing any vestiges of the clock signal noise, a gain amplifier, a clamping means for restoring DC video, and the like. A synchronization means 34 adds a "horizontal" blanking signal at the end of each vertical line of data. In the TDI mode, no frame or vertical retrace synchronization signals are needed. In this manner, an output video signal is generated on a continuum. By way of specific example, when the field of view is 1° and the array of sensor elements has 244 lines, then each 360° rotation of the TDI imaging means produces an image which has (360°/rev.) x (244 lines/°) or about 88,000 vertical lines/revolution, each line having 600 pixel values. That is, a resultant 360° panoramic image with a 1° field of view would be an image with 88,000 x 600 pixel values.

The sweeping means B includes a motor 40 operated by a motor controller/tachometer 42 to rotate the TDI imaging means A at a selectable rate. The motor controller 42 produces a clocking or tachometer signal at regular angular intervals, e.g. every 0.01° of angular rotation.
A clocking means **44** adjusts the tachometer signals to produce clocking pulses which cause the control means **24** to clock the lines of charge along the light sensitive array **14** in coordination with the rotation. For example, if the field of view is 1°, then the clocking signal would cause each vertical line of charge values to be shifted every 1/244th° of rotation. For a system with a zoom lens or other changeable field of view, a field of view indicating means **46**, such as a resolver connected with zoom lens motor **16**, produces an output signal which indicates the field of view. If the field of view is reduced to 1/10th°, for example, the field of view means **46** causes a multiplying means 48 to multiply the clock signal by **10**. That is, instead of producing a clock signal with every 1/244th° of rotation, a clock signal is produced after each 1/2440th° of rotation. Similarly, when the field of view is enlarged, e.g. to 5°, the multiplying means **48** divides the clock signal such that the control means **24** is clocked after each 5/244th° of rotation.

It will be noted that the amount of light integrated to make each pixel is dependent upon the rotational speed of the imaging means **A**. Preferably, the rotational speed of the imaging means is adjusted to control the exposure. That is, the rotational speed is accelerated or slowed until a proper exposure is achieved. This enables the rate at which image data is acquired to be maximized for available lighting conditions. Alternately, it may be appropriate to slow the speed of rotation. An iris **50** is provided for selectively limiting the amount of light received by the light sensitive array **14** to optimize exposure.

With continuing reference to FIGURE 1, a set of slip rings **52** enable the video signal to he removed from the rotating TDI camera means **A** and enable the timing and control signals to be introduced into the imaging means **A**. The slip rings can carry the clocking signals and the signals from the shift register as in FIGURE 1. Alternately, the analog video processing circuits and the clocking and control circuits can he mounted adjacent to the image sensor **14** for rotation therewith. The analog video output signals may he connected directly with a suitable display. Preferably, however, the video signals are conveyed to digital video section **60**. The digital video section includes an analog-to-digital converter **62**, a memory loading means **64** for storing the digital data or pixel values in a panoramic image memory **66**. The memory loading means receives the tachometer signals to coordinate corresponding lines of data in subsequent revolutions. In the above example in which the field of view is 0.1° and the sensor array is 244 x 600, the panoramic image memory stores an 88,000 x 600 array of pixel values. Each of the pixel or data values has a gray scale of 8, 10, 12, or more bits. A digital video processor **68** converts the digital pixel values or data to a digital video signal. The digital video signal may be appropriately displayed on a digital video monitor as a sampled or scrolling image, or the like. A scan conversion facility in the image processor provides a video output signal compatible with conventional video monitors.

A memory retrieval access means **70** selectively retrieves blocks of data from the panoramic memory **66**. For example, the memory access means may retrieve a series of 480 x 600, or other appropriately sized blocks of pixels and supply each block to a scan converter means **72**. The scan converter generates an appropriate video signal for display on one or more video monitors. Various format video signals are contemplated including digital video, panoramic video, frame video, RS-170 video, and the like. An array of video monitors **74** may be grouped such that one of the video monitors shows the image to the east, another shows the image to the west, another to the northeast, etc. This enables a viewing room to be surrounded by video monitors which provide a substantially real time panoramic display of the surroundings. An appropriate indicator, such as a vertical white line, may he provided to show the demarcation between the most recently received data and the data which was received almost a full revolution ago. As another option, a virtual reality means **76**, including virtual image display goggles, may receive an appropriate block of pixel values from the memory **62**. The virtual reality means **76** includes means for indicating the direction which the viewer is facing and looking. These direction signals are used to control the memory retrieval means **70** to retrieve the blocks of pixel values representing the image in the direction the viewer is looking. One or more VCR's may be connected with the scan converter for recording the images.

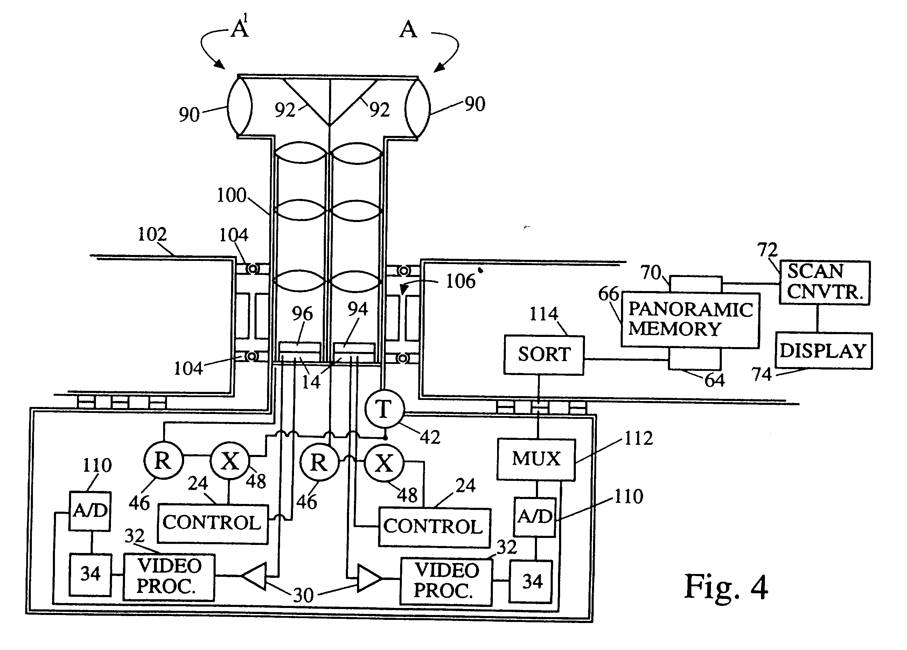

With reference to FIGURE 4, a plurality of image sensors **14**, each receiving a different field of view, spectrum, or the like, each facing in a different direction, are counted to rotate together. For example, two camera or image sensors mounted 180° apart enables the panoramic memory **66** to be updated twice as often. Alternately, the timing and control signals may be such that the output lines are interlaced to improve resolution. For example, one of the cameras may acquire odd-numbered vertical columns of the panoramic image and the other may acquire even-numbered vertical columns. As yet another option, the two cameras may be vertically offset to double the vertical field of view. As yet another option, the two cameras effective viewing position can be offset horizontally for stereoscopic imaging. As another example, an image intensifier may be disposed between the lens and the light sensitive element array **14** to increase light sensitivity.

One of the image sensing means **A** includes a lens **90** which detects light to a mirror **92** and the zoom lens **10**. A prism means **94** separates the light into three color components focused on each of three respective light sensitive elements of the array **14** for each pixel. Shift registers serialize the data which is then supplied to the panoramic memory.

A second image sensing means **A'** again has a zoom or other lens system **10** which focuses light on a phosphor **96**. The phosphor **96** converts light of a preselected wavelength into light of an optimal wavelength for the array of light sensing element array **14**. Optionally, a sensor may be used in which a material sensitive to non-visible light is placed on a silicon sensor and provide signals directly to the sensor as a result of receiving the non-visible light. For example, platinum silicide or pyroelectric materials may be used to sense infrared light. In a preferred embodiment the phosphor **96** may be an ultraviolet conversion phosphor, or phosphors which convert energy of other wavelengths into appropriate optical light for the sensor array **14**.

In the embodiment of FIGURE 1, the motor **40** rotates a shaft which rotates the TDI imaging means **A**. In the embodiment of FIGURE 4, the imaging means are mounted in a housing **100** which is mounted to a stationary structure **102** by one or more bearings **104** and a motor assembly 106. The tachometer **44** is mounted in conjunction with the motor **106**. With this arrangement, all of the control signals can be generated within the housing **100**. The slip ring bearing arrangement **52** carries the output video signal, input controls for the zoom lens motor **16**, controls for the iris **50**, and for the motor **106**. Input control signals can also shift the control means **24** between the time delay and integration mode and a conventional video imaging mode.

The output of each image processing channel **32** and synchronization means **34** is conveyed to an analog-to-digital converter **110**. A multiplexing means **112** multiplexes the digital video signals. A demultiplexing or other sorting means **114** sorts the multiplexed digital values into an appropriate panoramic memory or memory portion.

Although the lens assembly 10 is illustrated as a zoom lens, other lenses are also contemplated. For example, a lens or mirror 92 can be movable to shift the field of view. Alternatively, multiple lenses may be interchangeable, i.e. selectively moved into the optical path to change the optical properties. As yet another option, an anamorphic lens is used to alter the height to width ratio of the field of view. This alters the ratio of the coverage between the height of the image and the scan speed.

With reference again to FIGURE 2, in another alternate embodiment, the motor 40 can rotate the camera in either direction. When the camera changes direction, the polarity of the clock signals changes. More precisely, a reverse direction signal is provided to the control means 24 such that the control means shifts the charge values in the opposite direction along the rows at the designated clock speed. To this end, a second shift register 110 is provided at the other end of the light sensitive array 14. Because only one of the shift registers 22 and 116 would be used at a time, their outputs use the same output circuitry.

As yet another alternate embodiment, the shaft 100 is gimbaled or the like to compensate for tilt or rotational motion such as is found on an aircraft or other unstable platforms.

## Claims

1. A panoramic camera system comprising: a lens means (10) for focussing light from a field of view (12) onto an array of light sensitive elements (14); a sweeping means (B) for sweeping the field of view (12) about an axis of rotation, said sweeping means including a motor means (40) for rotating the lens (10) and the light sensitive element array (14) about the axis of rotation, the array of light sensitive elements (14) being defined by a plurality of lines of light sensitive elements, which element lines are oriented generally parallel to the axis of rotation; a time delay and integration control means (C) operatively connected to the sweeping means (B) for controlling the light sensitive array (14) such that lines of data are shifted along the array (14) in coordination with the rotation of the lens means (10) and the array (14) about the axis of rotation.

2. A system according to claim 1, further including a tachometer means (42) for producing clocking signals in accordance with the rotation, the tachometer means (42) being connected with the time delay and integration control means (C) to supply clocking signals thereto.

3. A system according to claim 2 further including: a field of view adjusting means (16) for selectively adjusting the field of view (12) of the lens means (10); a clocking signal adjusting means (44, 46, 48) operatively connected with the tachometer means (42) and the control means (C) for altering the clocking signals in accordance with changes in the field of view.

4. A system according to anyone of claims 1 to 3 further including: a video processing circuit (32) for processing the lines of data from the light sensitive element array (14) into analog video signals; an analog-to-digital converter means (62) for converting the analog video signals into digital video signals; a digital memory means (66) for storing the digital video signals.

5. A system according to claim 4 further including a memory updating means (64), the memory updating means (64) being connected with the tachometer means (42) and the analog-to-digital converter (62) for selectively updating the digital memory means (66) such that the digital memory means (66) holds a digital representation of a panoramic view which is updated with each resweep of a common panoramic region.

6. A system according to claim 5 further including an image processor means (72) operatively connected with the memory means (66) for converting portions of the panoramic image representation stored therein into man-readable displays.

7. A system according to claim 4 further including a vertical scan video monitor operatively connected with the video processing circuit (32) for converting the video signal into a man-readable display.

8. A system according to claim 1 further including: a second lens means (10) for focusing light from a second field of view on a second light sensitive element array (14); a second time delay and integration control means (24) for controlling the second light sensitive element array (14) such that lines of data are shifted along the light sensitive element array (14) in coordination with the sweeping about the axis of rotation.

9. A system according to claim 8 further including video processing means (32) for converting the lines of data from the first and second light sensitive element arrays (14) into analog video signals.

10. A system according to claim 9 further including a spectrum means (96) disposed between the second lens means (10) and the second light sensitive element array (14) for converting light of a preselected spectrum into light of a wavelength to which the second light sensitive element array (14) is sensitive.

11. A system according to claim 10 wherein the spectrum means (96) includes a platinum silicide coating for converting infrared light to an electrical signal to which the underlying array (14) is receptive.

12. A system according to claim 9 or claim 10 or claim 11 further including an analog to digital converter means (110) for converting the analog video signals to digital video signals.

13. A system according to claim 12 further including a multiplexing means (112) for multiplexing the digital video signals.

14. A system according to claim 12 further including a panoramic memory means (66) and a panoramic memory loading means (64) for loading digital video signal data from the digital video signals into the panoramic video memory means (66), the memory loading means (64) correlating data from corresponding spatial regions of the first and second fields of view into a composite image.

15. A system according to claim 12 further including first and second panoramic memory means and a memory loading means for loading the first panoramic memory means with digital video data from the first light sensitive element array (14) and for loading the second panoramic memory means with digital video data from the second light sensitive memory array (14).

16. A system according to claim 15 further including a digital video processing means for selectively reading digital video information from the first and second panoramic memory means and generating a man-readable display of at least a portion of the data therefrom.

## Patentansprüche

1. System für eine Panoramakamera enthaltend eine Linseneinrichtung (10) zur Fokussierung von Licht von einem Sichtfeld (12) auf ein Feld (14) von lichtempfindlichen Elementen, eine Schwenkeinrichtung (B) zum Abschwenken des Sichtfeldes (12) um eine Rotationsachse, wobei die Schwenkeinrichtung eine Motorvorrichtung (40) zur Rotation der Linse (10) und des durch mehrere Reihen von lichtempfindlichen Elementen definierten Feldes (14) von lichtempfindlichen Elementen um die Rotationsachse aufweist, wobei die Reihen von Elementen allgemein parallel zu der Rotationsachse ausgerichtet sind, und eine funktionell mit der Schwenkeinrichtung (B) verbundene Zeitverzögerungs- und Integrations-Steuervorrichtung (C) zur Steuerung des Feldes (14) von leichtempfindlichen Elementen, so daß Reihen von Daten entlang des Feldes in Abstimmung mit der Rotation der Linseneinrichtung (10) und des Feldes (14) um die Rotationsachse verschoben werden.

2. System nach Anspruch 1, weiterhin enthaltend eine Drehzahlmeßeinrichtung (42) zur Erzeugung von Taktsignalen entsprechend der Rotation, die mit der Zeitverzögerungs- und Integrations-Steuervorrichtung (C) verbunden ist, um letzterer Taktsignale zuzuführen.

3. System nach Anspruch 2, weiterhin enthaltend eine Sichtfeldeinstellvorrichtung (16) zum selektiven Einstellen des Sichtfeldes (12) der Linseneinrichtung (10), eine funktionell mit der Drehzahlmeßeinrichtung (42) und der Steuervorrichtung (C) verbundene Taktsignaleinstelleinrichtung (44, 46, 48) zum Verändern der Taktsignale entsprechend Änderungen des Sichtfeldes.

4. System nach einem der Ansprüche 1 bis 3, weiterhin enthaltend eine Videoverarbeitungsschaltung (32) zum Verarbeiten der Reihen von Daten von dem Feld (14) von lichtempfindlichen Elementen zu analogen Videosignalen, eine Analog-Digital-Wandlereinrichtung (62) zur Umsetzung der analogen Videosignale in digitale Videosignale und eine Digitalspeichereinrichtung (66) zur Speicherung der digitalen Videosignale.

5. System nach Anspruch 4, weiter enthaltend eine mit der Drehzahlmeßeinrichtung (42) und dem Analog-Digital-Wandler (62) verbundene Speicheraktualisierungsvorrichtung (64) zum selektiven Aktualisieren der Digitalspeichereinrichtung (66), so daß die Digitalspeichereinrichtung eine digitale Darstellung einer Panoramaansicht enthält, die mit jedem erneuten Abschwenken eines gemeinsamen Panoramabereichs aktualisiert wird.

6. System nach Anspruch 5, weiter enthaltend eine funktionell mit der Speichereinrichtung (66) verbundene Bildverarbeitungseinrichtung (72) zum Umsetzen von Teilen der in der Speichereinrichtung (66) gespeicherten Panoramabilddarstellung in für Menschen erkennbare Darstellungen.

7. System nach Anspruch 4, weiter enthaltend einen funktionell mit der Videoverarbeitungsschaltung (32) verbundenen Vertikalablenkvideomonitor zur Umsetzung des Videosignals in eine für Menschen erkennbare Anzeige.

8. System nach Anspruch 1, weiterhin enthaltend eine zweite Linseneinrichtung (10) zur Fokussierung von Licht von einem zweiten Sichtfeld auf eine zweites Feld (14) von lichtempfindlichen Elementen und eine zweite Zeitverzögerungs- und Integrations-Steuervorrichtung (24) zur Steuerung des zweiten Feldes (14) von lichtempfindlichen Elementen, so daß Reihen von Daten entlang des Feldes (14) von lichtempfindlichen Elementen in Abstimmung mit dem Schwenken um die Rotationsachse verschoben werden.

9. System nach Anspruch 8, weiterhin enthaltend Videoverarbeitungseinrichtungen (32) zum Umsetzen der Reihen von Daten von dem ersten und dem zweiten Feld (14) von lichtempfindlichen Elementen in analoge Videosignale.

10. System nach Anspruch 9, weiterhin enthaltend eine zwischen der zweiten Linseneinrichtung (10) und dem zweiten Feld (14) von lichtempfindlichen Elementen angeordneten Spektrumsänderungseinrichtung (96) zum Konvertieren von Licht mit einem vorgewählten Spektrum in Licht mit einer Wellenlänge, für die das zweite Feld (14) von lichtempfindlichen Elementen empfindlich ist.

11. System nach Anspruch 10, in dem die Spektrumsänderungseinrichtung (96) eine Platinsilicid-Beschichtung zur Konvertierung von Infrarotlicht in ein elektrisches Signal aufweist, für das das darunterliegende Feld (14) aufnahmefähig ist.

12. System nach Anspruch 9, 10 oder 11 weiterhin enthaltend eine Analog-Digital-Wandlereinrichtung (110) zur Umsetzung der analogen Videosignale in digitale Videosignale.

13. System nach Anspruch 12 weiterhin enthaltend eine Multiplexeinrichtung (112) zum Multiplexen der digitalen Videosignale.

14. System nach Anspruch 12, weiter enthaltend eine Panoramaspeichereinrichtung (66) und eine Panoramaspeicherladeeinrichtung (64) zum Laden von digitalen Videosignaldaten von den digitalen Videosignalen in die Panoramaspeichereinrichtung (66), wobei die Speicherladeeinrichtung (64) ein Verbundbild durch Korrelation von Daten von korrespondierenden Raumbereichen des ersten und des zweiten Sichtfeldes bildet.

15. System nach Anspruch 12, weiter enthaltend erste und zweite Panoramaspeichereinrichtungen und eine Speicherladeeinrichtung zum Laden der ersten Panoramaspeichereinrichtung mit digitalen Videodaten von dem ersten Feld (14) von lichtempfindlichen Elementen und zum Laden der zweiten Panoramaspeichereinrichtung mit digitalen Videodaten von dem zweiten Feld (14) von lichtempfindlichen Elementen.

16. System nach Anspruch 15, weiter enthaltend eine Digitalvideoverarbeitungseinrichtung zum selektiven Lesen von digitalen Videoinformationen von der ersten und zweiten Panoramaspeichereinrichtung und zum Erzeugen einer für Menschen erkennbaren Anzeige von mindestens Teilen der Daten darin.

## Revendications

1. Système à caméra panoramique, comprenant un dispositif à objectif (10) destiné à focaliser la lumière provenant d'un champ de vision (12) sur une matrice d'éléments photosensibles (14), un dispositif (B) de balayage du champ de vision (12) autour d'un axe de rotation, le dispositif de balayage comprenant un dispositif (40) à moteur destiné à faire tourner l'objectif (10) et la matrice (14) d'éléments photosensibles autour de l'axe de rotation, la matrice d'éléments photosensibles (14) étant délimitée par plusieurs lignes d'éléments photosensibles, les lignes d'éléments étant orientées en direction générale parallèle à l'axe de rotation, et un dispositif (C) de commande de retard et d'intégration de temps connecté pendant le fonctionnement au dispositif de balayage (B) pour la commande de la matrice photosensible (14) afin que des lignes de données soient décalées le long de la matrice (14) d'une manière coordonnée avec la rotation du dispositif à objectif (10) et de la matrice (14) autour de l'axe de rotation.

2. Système selon la revendication 1, comprenant en outre un dispositif à tachymètre (42) destiné à produire des signaux d'horloge en fonction de la rotation, le dispositif à tachymètre (42) étant connecté au dispositif (C) de commande à retard et d'intégration de temps pour la transmission de signaux d'horloge à celui-ci.

3. Système selon la revendication 2, comprenant en outre un dispositif (16) d'ajustement du champ de vision destiné à ajuster sélectivement le champ de vision (12) du dispositif à objectif (10), et un dispositif (44, 46, 48) d'ajustement de signal d'horloge connecté lors du fonctionnement au dispositif à tachymètre (42) et au dispositif de commande (C) pour modifier les signaux d'horloge d'après les changements du champ de vision.

4. Système selon l'une quelconque des revendications 1 à 3, comprenant en outre un circuit de traitement vidéo (32) destiné à traiter les lignes de données provenant de la matrice d'éléments photosensibles (14) sous forme de signaux vidéo analogiques, un dispositif convertisseur analogique-numérique (62) destiné à transformer les signaux vidéo analogiques en signaux vidéo numériques, et un dispositif de mémoire numérique (66) destiné à mémoriser les signaux vidéo numériques.

5. Système selon la revendication 4, comprenant en outre un dispositif (64) de remise à jour de mémoire, ce dispositif (64) de remise à jour de mémoire étant connecté au dispositif à tachymètre (42) et au convertisseur analogique-numérique (62) afin qu'il remette à jour sélectivement le dispositif à mémoire numérique (66), si bien que le dispositif à mémoire numérique (66) conserve une représentation numérique d'une vue panoramique qui est remise à jour à chaque nouveau balayage d'une région panoramique commune.

6. Système selon la revendication 5, comprenant en outre un dispositif processeur d'image (72) connecté pendant le fonctionnement au dispositif à mémoire (66) afin qu'il transforme des parties de la représentation d'image panoramique mémorisées en affichage lisible par l'homme.

7. Système selon la revendication 4, comprenant en outre un moniteur vidéo à balayage vertical connecté pendant le fonctionnement au circuit de traitement vidéo (32) pour la transformation du signal vidéo en un affichage lisible par l'homme.

8. Système selon la revendication 1, comprenant en outre un second dispositif à objectif (10) destiné à focaliser la lumière d'un second champ de vision sur une seconde matrice d'éléments photosensibles (14), un second dispositif de commande de retard et d'intégration dans le temps (24) destiné à commander la seconde matrice d'éléments photosensibles (14) de manière que les lignes de données soient décalées le long de la matrice d'éléments photosensibles (14) de manière coordonnée avec le balayage autour de l'axe de rotation.

9. Système selon la revendication 8, comprenant en outre un dispositif de traitement vidéo (32) destiné à transformer les lignes de données provenant de la première et de la seconde matrice d'éléments photosensibles (14) en signaux vidéo analogiques.

10. Système selon la revendication 9, comprenant en outre un dispositif à spectre (96) disposé entre le second dispositif à objectif (10) et la seconde matrice d'éléments photosensibles (14) afin qu'il transforme la lumière d'un spectre prédéterminé en lumière à une longueur d'onde à laquelle est sensible la seconde matrice d'éléments photosensibles (14).

11. Système selon la revendication 10, dans lequel le dispositif à spectre (96) comprend un revêtement de siliciure de platine destiné à transformer la lumière infrarouge en un signal électrique auquel est sensible la matrice (14) placée au-dessous.

12. Système selon la revendication 9, 10 ou 11, comprenant en outre un dispositif convertisseur analogique-numérique (110) destiné à transformer les signaux vidéo analogiques en signaux vidéo numériques.

13. Système selon la revendication 12, comprenant en outre un dispositif (112) de multiplexage des signaux vidéo numériques.

14. Système selon la revendication 12, comprenant en outre un dispositif à mémoire panoramique (66) et un dispositif (64) de chargement de mémoire panoramique destiné à charger les données des signaux vidéo numériques provenant des signaux vidéo numériques dans le dispositif à mémoire vidéo panoramique (66), le dispositif (64) de chargement de mémoire assurant la corrélation des données de régions spatiales correspondantes du premier et du second champ de vision dans une image composite.

15. Système selon la revendication 12, comprenant en outre un premier et un second dispositif à mémoire panoramique, et un dispositif de chargement du premier dispositif à mémoire panoramique des données vidéo numériques provenant de la première matrice d'éléments photosensibles (14) et à charger le second dispositif à mémoire panoramique des données vidéo numériques de la seconde matrice de mémoire d'éléments photosensibles (14).

16. Système selon la revendication 15, comprenant en outre un dispositif de traitement vidéo numérique destiné à lire sélectivement les informations vidéo numériques du premier et du second dispositif à mémoire panoramique et à créer un affichage lisible par l'homme d'une partie au moins des données récupérées.
